# EUROPEAN PATENT APPLICATION

(11) **EP 4 725 727 A1**
(43) Date of publication of application: **15.04.2026**
(21) Application number: 25204299.9
(22) Date of filing: 24.09.2025
(51) Int. Cl.: B60H 1/32

(54) **IN-VEHICLE AIR CONDITIONER**

(30) Priority: 11.10.2024 JP 2024178610
(71) Applicant: TOYOTA JIDOSHA KABUSHIKI KAISHA, Toyota-shi, Aichi-ken 471-8571 (JP)
(72) Inventor: TSUCHIYA, Akira, 471-8571 Toyota-shi, Aichi-ken (JP)
(74) Representative: Cabinet Beau de Loménie

(57) **Abstract**

An in-vehicle air conditioner (12, 12a) includes a refrigerant circuit (R, Ra) for circulating a hydrocarbon refrigerant, the refrigerant circuit (R, Ra) having a compressor (20), a condenser (22), an expansion valve (24a), and an evaporator (26a). The in-vehicle air conditioner (12, 12a) includes a first heat exchanger (30) which is integrally formed with the condenser (22) of the refrigerant circuit (R, Ra) to transfer heat from the refrigerant contained in the condenser (22) to a first cooling liquid, a first cooling liquid circuit (C1) for circulating the first cooling liquid, a second heat exchanger (40) which is integrally formed with the evaporator (26a) of the refrigerant circuit (R, Ra) to cool a second cooling liquid with the refrigerant contained in the evaporator (26a), a second cooling liquid circuit (C2) for circulating the second cooling liquid, and a heat shield plate (100, 100a, 100a-1, 100b) disposed between an area including the refrigerant circuit (R, Ra), the first heat exchanger (30), and the second heat exchanger (40) and another area including a heat generating element (14).

## Description

### TECHNICAL FIELD

This specification discloses an in-vehicle air conditioner, particularly an in-vehicle air conditioner using a hydrocarbon refrigerant.

### BACKGROUND

In recent years, hydrocarbon refrigerants (HC refrigerants) such as propane, which have a low global warming potential, are being considered for use as refrigerants in air conditioners. Since HC refrigerants are flammable, configurations to prevent refrigerant leakage and ensure safety in the event of refrigerant leakage are being considered.

Patent Literature 1 (JP 2003-199293 A) discloses a cooling device for a drive device with an electric motor, the cooling device includes an oil circulation system for cooling the electric motor and a water circulation system for cooling the oil by heat exchange.

### SUMMARY

A vehicle includes heat generating elements such as engine, motor, inverter, and battery. The vehicle also includes electric wire connections such as battery power terminals, electrical equipment connectors, and connectors between wires. At electric wire connections, sparks may be generated due to poor contact between two electrically conductive portions. In in-vehicle air conditioners, it is desirable to isolate the hydrocarbon refrigerant circuit from heat generating elements or electric wire connections inside the vehicle body in order to improve vehicle safety.

Therefore, this specification discloses an in-vehicle air conditioner that isolates a hydrocarbon refrigerant circuit from a heat generating element or an electric wire connection within a vehicle body.

An in-vehicle air conditioner disclosed in this specification includes a refrigerant circuit for circulating a hydrocarbon refrigerant, the refrigerant circuit includes a compressor, a condenser for heat dissipation, an expansion valve, and an evaporator for heat absorption. The in-vehicle air conditioner includes a first heat exchanger which is integrally formed with the condenser of the refrigerant circuit to transfer heat from the refrigerant contained in the condenser to a first cooling liquid; a first cooling liquid circuit for circulating the first cooling liquid, the first cooling liquid circuit having a radiator; a second heat exchanger which is integrally formed with the evaporator of the refrigerant circuit to cool a second cooling liquid with the refrigerant contained in the evaporator; a second cooling liquid circuit for circulating the second cooling liquid, the second cooling liquid circuit having a cooler core; an air conditioning unit which includes an air passage in which the cooler core is disposed, the air conditioning unit being configured to cool air passing through the air passage and send the cooled air to a vehicle compartment; and a heat shield plate disposed between an area including the refrigerant circuit, the first heat exchanger, and the second heat exchanger and another area including a heat generating element disposed within a vehicle.

According to this configuration, since the refrigerant circuit dissipates heat to the first cooling liquid of the first cooling liquid circuit and absorbs heat from the second cooling liquid of the second cooling liquid circuit, the refrigerant circuit can be concentrated in a relatively narrow area inside the vehicle, and the refrigerant circuit and the first and second heat exchangers can be isolated from the heat generating element by heat shield plate. Since the heat shield plate blocks radiant heat from the heat generating element, heating of the refrigerant circuit due to this heat is suppressed. Additionally, in the unlikely event of a leak of hydrocarbon refrigerant from the refrigerant circuit, the heat shield plate prevents the refrigerant from flowing into the heat generating element.

In the in-vehicle air conditioner according to the present disclosure, the area including the refrigerant circuit, the first heat exchanger, and the second heat exchanger may be located above the other area including the heat generating element. The heat shield plate may include an inclined portion that is inclined downward toward one end of the heat shield plate. A lower end of the inclined portion of the heat shield plate may be located outside the heat generating element.

Hydrocarbon refrigerants are generally heavier than air. Therefore, according to the above configuration, in the event of a leak of hydrocarbon refrigerant from the refrigerant circuit, the refrigerant can be collected on the upper surface of the heat shield plate, flow in the downward direction of the heat shield plate, and be guided from the lower end of the heat shield plate to the outside of the heat generating element.

In the in-vehicle air conditioner according to the present disclosure, the heat generating element may include a high-temperature portion and a low-temperature portion that is at a lower temperature than the high-temperature portion. The inclined portion of the heat shield plate may include an upper portion located above the high-temperature portion of the heat generating element and a lower portion located at a position lower than the upper portion and above the low-temperature portion of the heat generating element.

According to this configuration, in the unlikely event that a hydrocarbon refrigerant leaks from the refrigerant circuit, the refrigerant is received on the upper surface of the heat shield plate and guided from the upper portion of the heat shield plate, which may become hot, to the lower portion of the heat shield plate, which may become cooler.

In the in-vehicle air conditioner according to the present disclosure, the inclined portion of the heat shield plate may have guides protruding upward at opposite ends of the inclined portion, the guides facing each other. The inclined portion of the heat shield plate may have no guide protruding upward on the lower end.

According to this configuration, in the unlikely event that a hydrocarbon refrigerant leaks from the refrigerant circuit, the guides of the inclined portion of the heat shield plate can prevent the refrigerant from flowing down from the heat shield plate to the heat generating element. Furthermore, the refrigerant can be guided from the lower end of the inclined portion to the outside of the heat generating element.

An in-vehicle air conditioner disclosed in this specification includes a refrigerant circuit for circulating a hydrocarbon refrigerant, the refrigerant circuit includes a compressor, a condenser for heat dissipation, an expansion valve, and an evaporator for heat absorption. The in-vehicle air conditioner includes a first heat exchanger which is integrally formed with the condenser of the refrigerant circuit to transfer heat from the refrigerant contained in the condenser to a first cooling liquid; a first cooling liquid circuit for circulating the first cooling liquid, the first cooling liquid circuit having a radiator; a second heat exchanger which is integrally formed with the evaporator of the refrigerant circuit to cool a second cooling liquid with the refrigerant contained in the evaporator; a second cooling liquid circuit for circulating the second cooling liquid, the second cooling liquid circuit having a cooler core; an air conditioning unit which includes an air passage in which the cooler core is disposed, the air conditioning unit being configured to cool air passing through the air passage and send the cooled air to a vehicle compartment; and a partition plate disposed between an area including the refrigerant circuit, the first heat exchanger, and the second heat exchanger and another area including an electric wire connection disposed within a vehicle.

According to this configuration, in the event that a hydrocarbon refrigerant leaks from the refrigerant circuit, the partition plate prevents the refrigerant from flowing to the electric wire connection.

In the in-vehicle air conditioner according to the present disclosure, the hydrocarbon refrigerant may be a refrigerant composed of propane or a refrigerant mainly composed of propane.

The vehicle disclosed in this specification includes the above-mentioned in-vehicle air conditioner.

According to the technology disclosed in this specification, a hydrocarbon refrigerant circuit can be isolated from a heat generating element or an electric wire connection within a vehicle body.

### BRIEF DESCRIPTION OF DRAWINGS

Embodiments of the present disclosure will be described based on the following figures, wherein:
FIG. 1 is a schematic diagram showing the configuration of an air conditioner;
FIG. 2 is a schematic diagram showing the layout of air conditioner in a vehicle;
FIG. 3 is a perspective view showing the position of the refrigerant module in a vehicle;
FIG. 4 is a perspective view showing a heat shield plate and surrounding structure;
FIG. 5 is a perspective view showing another heat shield plate and surrounding structures;
FIG. 6 is a perspective view showing a further heat shield plate and surrounding structure;
FIG. 7 is a schematic diagram showing the configuration of another air conditioner.

### DESCRIPTION OF EMBODIMENTS

### <Preface>

The embodiment will be described below with reference to the drawings. In all drawings, the same reference numerals indicate the same elements, and duplicate descriptions are omitted. In the following description, unless otherwise specified, terms indicating directions and orientations such as front, rear, left, right, up, and down refer to directions and orientations relative to the vehicle. In each figure, the direction of the arrow FR indicates forward, the direction of the arrow UP indicates upward, and the direction of the arrow LH indicates left.

The air conditioner is installed in a vehicle such as an automobile. In the embodiments described below, the type of vehicle in which the air conditioner is installed is not limited. For example, the vehicle may be an engine vehicle powered by an engine or an electric vehicle powered by a motor. The vehicle may also be a Hybrid Electric Vehicle (HEV) or a Plug-in Hybrid Electric Vehicle (PHEV) equipped with both an engine and a motor. The vehicle may also be a Fuel Cell Electric Vehicle (FCEV) equipped with a fuel cell, or a Battery Electric Vehicle (BEV) that travels on electric power stored in a battery.

The air conditioner includes a refrigerant circuit in which a hydrocarbon refrigerant (referred to as a HC refrigerant) circulates. HC refrigerants are flammable. Examples of HC refrigerants include propane, butane, isobutane, ethane, ethylene, and propylene. In the refrigerant circuit, one type of these HC refrigerants or a mixture of two or more of these HC refrigerants may be used. In addition, a mixed refrigerant containing one or more types of HC refrigerants as the main components and including a refrigerant other than HC refrigerants and various additives may be used in the refrigerant circuit. For example, in a refrigerant circuit, propane or a refrigerant containing propane as the main component and at least one of other refrigerants and additives (a refrigerant containing propane as the main component) may be used. An HC refrigerant may be R290, for example. In this specification, hydrocarbon refrigerants (HC refrigerants) refer to pure hydrocarbon refrigerants or refrigerants containing hydrocarbon refrigerants as the main component.

The refrigerant circuit is the heat source for the air conditioner. The refrigerant circuit includes, in order along the direction of refrigerant flow, a compressor, a condenser for heat dissipation, an expansion valve, and an evaporator for heat absorption. A receiver may be provided between the condenser and the expansion valve. An accumulator may also be provided between the evaporator and the compressor.

The air conditioner may include a high-temperature cooling liquid circuit in which cooling liquid heated by a condenser of a refrigerant circuit circulates, and a low-temperature cooling liquid circuit in which cooling liquid cooled by an evaporator of the refrigerant circuit circulates. The cooling liquid is a heat transfer medium, and the high-temperature cooling liquid circuit and the low-temperature cooling liquid circuit are each a heat transfer medium circuit.

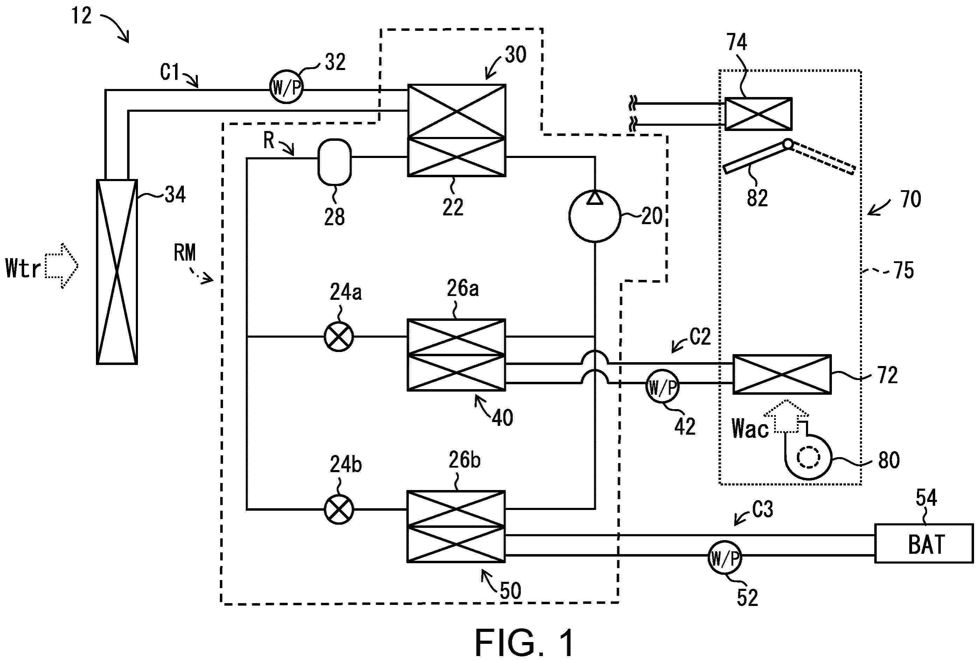

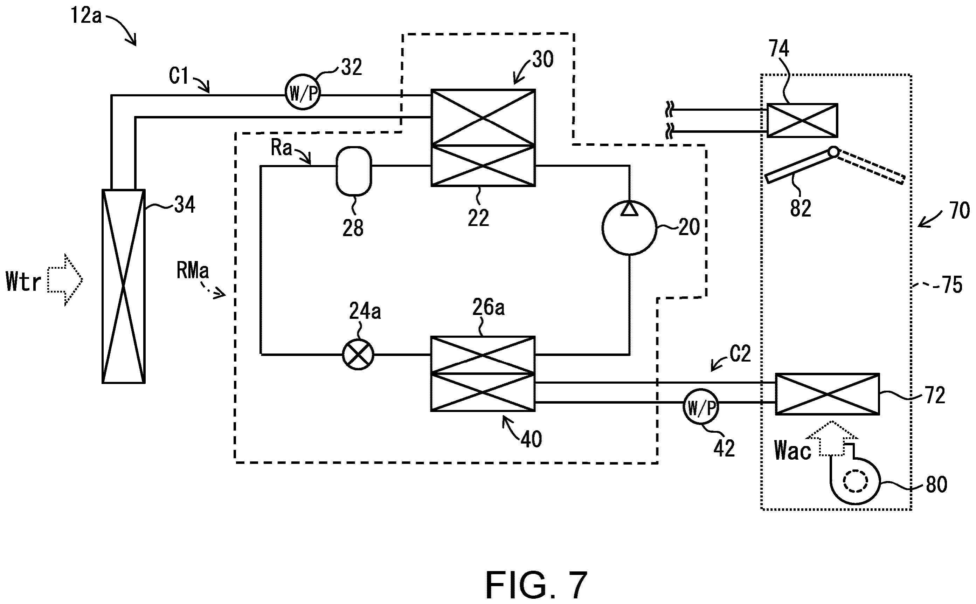

In the embodiment described below, as shown in FIG. 1, the air conditioner 12 includes the first cooling liquid circuit C1 as a high-temperature cooling liquid circuit and second and third cooling liquid circuits C2 and C3 as low-temperature cooling liquid circuits. The air conditioner 12 may be configured without the third cooling liquid circuit C3, which is described with reference to FIG. 7.

The cooling liquids of the first to third cooling liquid circuits C1, C2, and C3 may be cooling water. That is, the cooling liquid may be water without additives, water mixed with additives such as antifreeze agents or corrosion inhibitors, or coolant fluid. Furthermore, the cooling liquids may be a liquid heat transfer medium such as oil, and are not limited to the above.

In the embodiment described below, the refrigerant circuit is located under the front hood of the vehicle. Hereinafter, regardless of the presence or absence of a power source (engine, motor, etc.) under the front hood and the type of power source, the area under the front hood is referred to as the "engine room".

### <Embodiment>

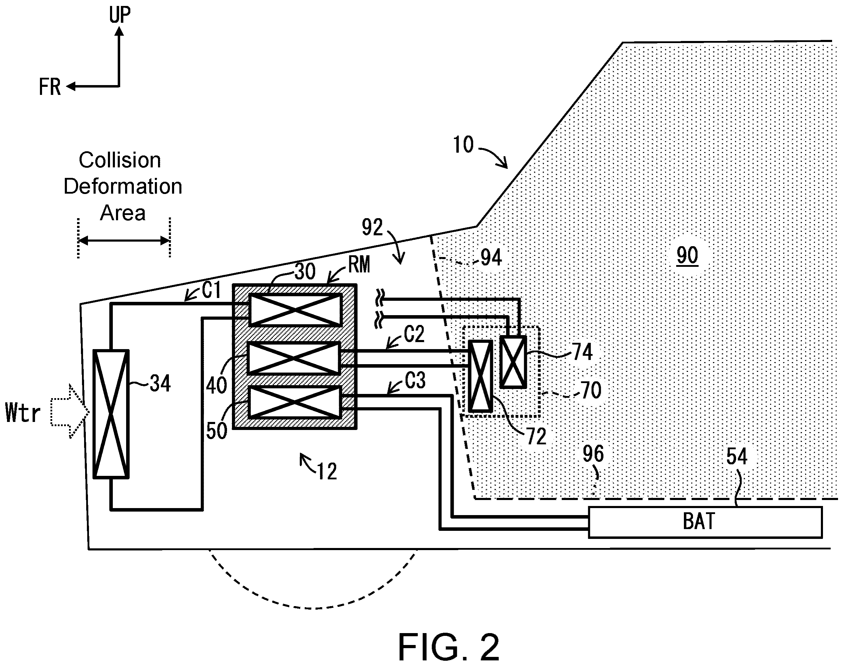

FIG. 1 is a schematic diagram showing the configuration of an air conditioner 12 according to an embodiment. FIG. 2 is a schematic diagram showing the arrangement of an air conditioner 12 in a vehicle. The vehicle 10 includes the battery 54 that supplies power to a motor as a power source. The vehicle 10 may be, for example, a Battery Electric Vehicle (BEV), a Hybrid Electric Vehicle (HEV), or a Plug-in Hybrid Electric Vehicle (PHEV).

The air conditioner 12 air-conditions the vehicle compartment 90 and cools the battery 54. The air conditioner 12 may be configured to cool in-vehicle device such as a power control unit (PCU) together with the battery 54 or in place of the battery 54.

As shown in FIG. 1, the air conditioner 12 includes the refrigerant circuit R that serves as a heat source, the first to third cooling liquid circuits C1, C2, and C3, and the air conditioning unit 70. The first cooling liquid circuit C1 circulates a first cooling liquid heated by the refrigerant in the refrigerant circuit R. The second cooling liquid circuit C2 circulates a second cooling liquid cooled by the refrigerant in the refrigerant circuit R. Similarly, the third cooling liquid circuit C3 circulates a third cooling liquid cooled by the refrigerant in the refrigerant circuit R. The air conditioning unit 70 supplies air cooled by the second cooling liquid circulating in the second cooling liquid circuit C2 to the vehicle compartment.

The refrigerant circuit R is a closed circuit for circulating an HC refrigerant (hereinafter simply referred to as "refrigerant"), which is configured by the compressor 20, the condenser 22, the receiver 28, the expansion valves 24a and 24b, and the evaporators 26a and 26b connected in series by refrigerant pipes. The expansion valve 24a and the evaporator 26a are connected in series, and similarly, the expansion valve 24b and the evaporator 26b are connected in series. The refrigerant flow paths of the expansion valve 24a and the evaporator 26a, and the refrigerant flow paths of the expansion valve 24b and the evaporator 26b are connected in parallel.

The air conditioner 12 includes the heat exchanger 30. The heat exchanger 30 is integrally formed with the condenser 22 of the refrigerant circuit R and causes heat exchange between the refrigerant of the refrigerant circuit R and the first cooling liquid of the first cooling liquid circuit C1. The heat exchanger 30 is a water-cooled condenser and may be, for example, a plate-type heat exchanger. The heat exchanger 30 is a first heat exchanger.

The first cooling liquid circuit C1 is a closed circuit for circulating the first cooling liquid, which is configured by connecting the water pump 32, the heat exchanger 30, and the radiator 34 in series with cooling liquid pipes. The radiator 34 is a heat exchanger for heat exchange between the first cooling liquid and the vehicle traveling wind Wtr. **In** the first cooling liquid circuit C1, the first cooling liquid pumped by the water pump 32 becomes hot due to the heat dissipated by the refrigerant in the condenser 22 in the refrigerant circuit R as it passes through the heat exchanger 30. The hot first cooling liquid is sent to the radiator 34, where it is cooled by the vehicle traveling wind Wtr.

The air conditioner 12 also includes the heat exchanger 40. The heat exchanger 40 is integrally formed with the evaporator 26a of the refrigerant circuit R and causes heat exchange between the refrigerant of the refrigerant circuit R and the second cooling liquid of the second cooling liquid circuit C2. The heat exchanger 40 may be, for example, a plate-type heat exchanger. The heat exchanger 40 is a second heat exchanger.

The second cooling liquid circuit C2 is a closed circuit for circulating the second cooling liquid, which is configured by connecting the water pump 42, the heat exchanger 40, and the cooler core 72 in series with cooling liquid pipes. The cooler core 72 is a heat exchanger for heat exchange between the second cooling liquid and air conditioning wind Wac, and is disposed in the air passage 75 of the air conditioning unit 70. In the second cooling liquid circuit C2, the second cooling liquid pumped by the water pump 42 is cooled by the heat absorbed from the refrigerant in the evaporator 26a in the refrigerant circuit R as it passes through the heat exchanger 40. The cooled second cooling liquid is sent to the cooler core 72, where it cools the air conditioning wind Wac.

The air conditioner 12 also includes the heat exchanger 50. The heat exchanger 50 is integrally formed with the evaporator 26b of the refrigerant circuit R and causes heat exchange between the refrigerant of the refrigerant circuit R and the third cooling liquid of the third cooling liquid circuit C3. The heat exchanger 50 may be, for example, a plate-type heat exchanger. The heat exchanger 50 is a third heat exchanger.

The third cooling liquid circuit C3 is a closed circuit for circulating the third cooling liquid, which is configured by connecting the water pump 52, the heat exchanger 50, and the battery 54 in series with cooling liquid pipes. In the third cooling liquid circuit C3, the cooling liquid pumped by the water pump 52 is cooled by the heat absorbed from the refrigerant in the evaporator 26b in the refrigerant circuit R as it passes through the heat exchanger 50. The cooled third cooling liquid is sent to the battery 54 to cool the battery 54. In this specification, the third cooling liquid circuit C3 and the third cooling liquid are also referred to as the battery cooling liquid circuit and the battery cooling liquid, respectively.

In this specification, the expansion valve 24a, the evaporator 26a, and the heat exchanger 40 are also referred to as the air conditioner expansion valve, the air conditioner evaporator, and the air conditioner heat exchanger, respectively. In addition, the expansion valve 24b, the evaporator 26b, and the heat exchanger 50 are also referred to as the battery expansion valve, the battery evaporator, and the battery heat exchanger, respectively.

In the refrigerant circuit R, the refrigerant circulates as follows. The compressor 20 discharges high-pressure gaseous refrigerant, which is discharged into the condenser 22, where it is liquefied and condensed by heat exchange with the first cooling liquid of the first cooling liquid circuit C1 passing through the heat exchanger 30, thereby becoming high-pressure liquid refrigerant. The high-pressure liquid refrigerant flowing out of the condenser 22 is depressurized by the expansion valve 24a via the receiver 28, expands, becomes low-pressure refrigerant, and flows into the evaporator 26a. The low-pressure refrigerant flowing into the evaporator 26a evaporates by heat exchange with the second cooling liquid of the second cooling liquid circuit C2 passing through the heat exchanger 40 in the evaporator 26a, becomes a gas refrigerant, flows out of the evaporator 26a, and returns to the compressor 20.

In addition, the high-pressure liquid refrigerant flowing out of the condenser 22 is depressurized by the expansion valve 24b via the receiver 28, expands, becomes low-pressure refrigerant, and flows into the evaporator 26b. The low-pressure refrigerant flowing into the evaporator 26b evaporates by heat exchange with the third cooling liquid of the third cooling liquid circuit C3 passing through the heat exchanger 50 in the evaporator 26b, becomes a gas refrigerant, flows out of the evaporator 26b, and returns to the compressor 20.

The air conditioning unit 70 includes the blower 80 and the air passage 75 formed by the case (not shown). Inside the air passage 75, the blower 80, the cooler core 72, and the heater core 74 are arranged in order from the air flow direction. The heater core 74 is a heat exchanger to which cooling water heated by, for example, engine cooling water or a PTC heater for water heating is supplied. The heater core 74 may also be configured to be supplied with cooling liquid heated by the heat exchanger 30.

The blower 80 introduces air into the air passage 75 from the air intake port (not shown) and blows the air through the cooler core 72 and the heater core 74 to supply temperature-controlled air to the vehicle compartment. The air-mix door 82 is provided inside the air passage 75, and the air-mix door 82 adjusts the ratio of air passing through the cooler core 72 to the heater core 74. The air conditioning unit 70 may employ conventional HVAC (Heating, Ventilation, and Air Conditioning) technology.

As shown in FIG. 2, the engine room 92 and the vehicle compartment 90 are partitioned by the dashboard 94. The instrument panel (not shown) is provided on the vehicle compartment 90 side of the dashboard 94. The air conditioning unit 70 is disposed between the instrument panel and the dashboard 94.

The battery 54 is located under the floor of the vehicle compartment 90, i.e., under the floor panel 96. The battery 54 may also be located under the seats or in the rear of the vehicle, and its position is not limited.

The air conditioner 12 includes a controller. The controller may be configured to include processor(s) and memory device(s), and may be, for example, an ECU (Electronic Control Unit). The controller controls the devices included in the air conditioner 12 based on detection information from a plurality of sensors (temperature sensors that detect outside air temperature, inside air temperature, and battery temperature, a solar radiation sensor, a pressure sensor, etc.) and setting information from a control panel operated by the user. The controller may employ conventional air conditioner control technology.

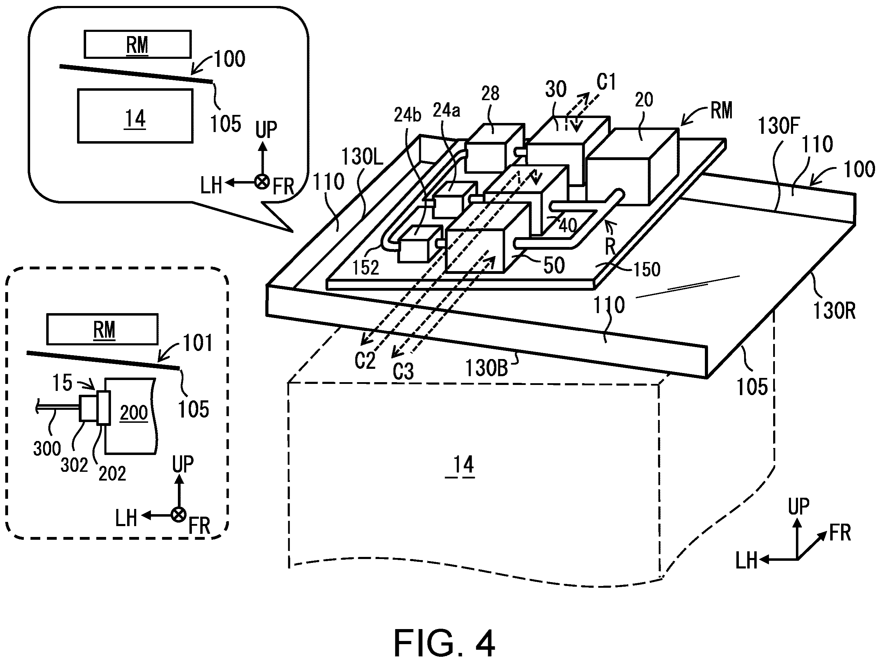

The refrigerant circuit R is integrated to constitute the refrigerant module RM as shown in FIG. 4. Specifically, the refrigerant module RM is a unit that integrates the devices (parts) inside the dotted line in FIG. 1 of the air conditioner 12. As shown in FIG. 4, the refrigerant module RM includes the compressor 20, the heat exchangers 30, 40, and 50, the receiver 28, and the two expansion valves 24a and 24b, which are fixed to the upper surface of the plate 150 by screws or the like. The devices are connected to each other by refrigerant pipes 152.

The refrigerant module RM is located in the engine room 92 as shown in FIG. 2. The first cooling liquid circuit C1 is located in front of the refrigerant module RM. The refrigerant module RM may be positioned behind the front collision deformation area of the vehicle. This reduces the collision load input to the refrigerant module RM (refrigerant circuit R) in the event of a frontal collision of the vehicle.

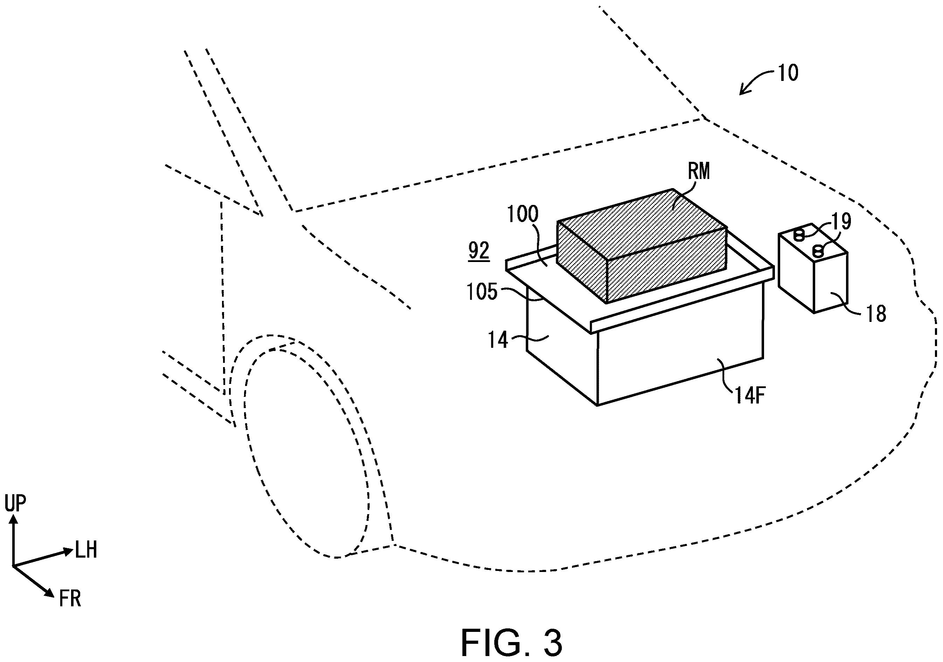

FIG. 3 shows a more specific position of the refrigerant module RM. The vehicle 10 includes the drive unit 14. The drive unit 14 includes power source(s) for the vehicle 10 and a structure integrated with the power source(s). The power source(s) may include an engine, a motor, or both. The drive unit 14 may be, for example, an engine unit, a motor unit, a powertrain unit including an engine and a transaxle, or an eAxle. The drive unit 14 is disposed in the engine room 92.

As shown in FIG. 3, the refrigerant module RM is disposed rearward of the front end 14F of the drive unit 14 and above the drive unit 14. The heat shield plate 100 is disposed between the refrigerant module RM and the drive unit 14. The area rearward of the front end 14F of the drive unit 14 is a space protected during a frontal collision of the vehicle 10. By disposing the refrigerant module RM in the space, the collision load input to the refrigerant module RM (the refrigerant circuit R) during a frontal collision of the vehicle 10 can be reduced.

FIG. 4 is a perspective view showing the heat shield plate 100 and the surrounding structure, and the upper left part of the figure shows the schematic configuration thereof. A different embodiment (the partition plate 101 of the electric wire connection 15) is shown inside the dotted line at the bottom left of the figure, which will be explained later.

The refrigerant module RM is disposed on the upper side of the drive unit 14. The drive unit 14 is an example of a heat generating element. The heat shield plate 100 is disposed between the refrigerant module RM and the drive unit 14. The refrigerant module RM and the heat shield plate 100 are each held by a structure in the engine room 92 via brackets (not shown).

The heat shield plate 100 has a rectangular shape when viewed from above. The refrigerant module RM is located inside the heat shield plate 100 when viewed from above. The heat shield plate 100 has front edge 130F, rear edge 130B, left edge 130L, and right edge 130R. The heat shield plate 100 slopes downward toward the right side (The heat shield plate 100 includes an inclined portion that is inclined downward toward one end of the heat shield plate 100). The heat shield plate 100 has guides 110 protruding upward from the front edge 130F, the rear edge 130B, and the left edge 130L. The front edge 130F and the rear edge 130B are opposite each other. The right edge 130R of the heat shield plate 100 is the lower end 105 of the heat shield plate 100, where the guide 110 protruding upward is omitted. The lower end 105 of the heat shield plate 100 is located outside the drive unit 14.

The heat shielding performance of the heat shield plate 100 is obtained by forming the plate itself with heat shielding material. Alternatively, the heat shielding performance of the heat shield plate 100 may be obtained by providing aluminum vapor deposition, aluminum foil, etc. on the surface of the plate facing the heat generating element, i.e., the lower surface facing the drive unit 14.

According to the embodiment described above, the refrigerant circuit R can be concentrated in a relatively narrow area within the vehicle because it dissipates heat to the cooling liquid in the first cooling liquid circuit C1 and absorbs heat from the cooling liquids in the second and third cooling liquid circuits C2 and C3. Therefore, the refrigerant circuit R and the first to third heat exchangers 30, 40, and 50 can be isolated from the drive unit 14 by the heat shield plate 100. Since the radiant heat from the drive unit 14 is blocked by the heat shield plate100, heating of the refrigerant circuit R due to this heat can be suppressed. Additionally, in the unlikely event of a leak of a HC refrigerant from the refrigerant circuit R, the heat shield plate 100 prevents the refrigerant from flowing into the drive unit 14.

In addition, according to the embodiment described above, the heat shield plate 100 slopes downward toward one side (the right side in FIG. 4), and the lower end 105 of the heat shield plate 100 is located outside the drive unit 14. HC refrigerants are generally heavier than air. Therefore, in the event of a leak of a HC refrigerant from the refrigerant circuit R, the refrigerant can be caught on the upper surface of the heat shield plate 100 and flow along the downward direction of the heat shield plate 100. The refrigerant can then be guided from the lower end 105 of the heat shield plate 100 to the exterior of the drive unit 14.

Furthermore, according to the embodiment described above, since the heat shield plate 100 has the guides 110 that protrudes upward, it is possible to prevent a HC refrigerant that has leaked from flowing down to the drive unit 14.

The lower end 105 of the heat shield plate 100 may be provided on the side of the heat shield plate 100 where no other heat generating element or electric wire connection such as a connector of electrical equipment is located. That is, as shown in FIG. 3, when the power supply terminal 19 (electric wire connection) of the auxiliary battery 18 is located on the left side of the vehicle (right side of FIG. 3) of the heat shield plate 100, for example, the lower end 105 of the heat shield plate 100 is provided on the right side of the vehicle (left side of FIG. 3) of the heat shield plate 100. This prevents a leaked HC refrigerant from approaching the electric wire connection (the power supply terminal 19 of the auxiliary battery 18 in the previous example) or another heat generating element.

### <Another heat shield plate>

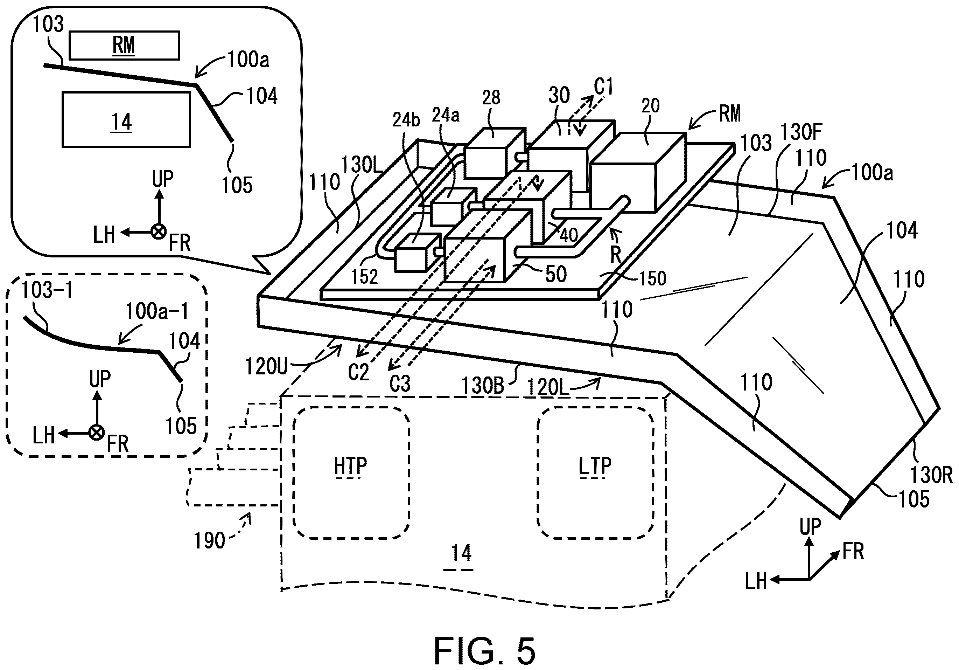

FIG. 5 is a perspective view showing another heat shield plate 100a and surrounding structure, and the upper left part of the figure shows the schematic configuration thereof. This heat shield plate 100a is configured by adding an extension portion 104 to the heat shield plate 100 described above (see FIG. 4). The extension portion 104 is a portion that extends the part of the lower end 105 side (the part of right side in FIG. 5) of the heat shield plate 100a and is bent toward the drive unit 14. The heat shield plate 100a includes the base portion 103 located on the lower side of the refrigerant module RM and the extension portion 104 bent relative to the base portion 103. The extension portion 104 has a shape that gradually tapers downward from the upper side to the lower side (narrowing in width).

According to this heat shield plate 100a, in the event that a HC refrigerant leaks from the refrigerant circuit R, the refrigerant is received at the base portion 103 of the heat shield plate 100 and flows to the extension portion 104, where it is discharged to a limited area outside the drive unit 14.

Now, with reference to FIG. 5, the arrangement of the heat shield plate 100a for the drive unit 14 having high-temperature portion HTP and low-temperature portion LTP will be described. The drive unit 14 having an engine includes the intake manifold (not shown) and the exhaust manifold 190. The exhaust manifold 190 becomes hotter than the intake manifold. Therefore, the side of the drive unit 14 where the exhaust manifold 190 is located (the left side in FIG. 5) becomes a high-temperature portion HTP, and the side of the drive unit 14 where the intake manifold (not shown) is located (the right side in FIG. 5) becomes a low-temperature portion LTP, which is at a lower temperature than the high-temperature portion HTP. In this way, as the drive unit 14 (heat generating element) includes a high-temperature portion HTP and a low-temperature portion LTP, as shown in FIG. 5, the portion (upper portion 120U) of the heat shield plate 100a located above the high-temperature portion HTP of the drive unit 14 should be positioned higher than the portion (lower portion 120L) of the heat shield plate 100a located above the low-temperature portion LTP of the drive unit 14. This suppresses heating of the refrigerant circuit R by the high-temperature portion HTP of the drive unit 14. Additionally, in the event of a leak of a HC refrigerant from the refrigerant circuit R, the refrigerant can be directed from the upper portion 120U of the heat shield plate 100a, which may become high-temperature, to the lower portion 120L of the heat shield plate 100a, which may become lower-temperature.

The downward slope of the base portion 103 of the heat shield plate 100a may be curved, as shown inside the dotted line at the bottom left of FIG. 5. The area inside the dotted line in FIG. 5 shows a schematic cross section of a heat shield plate 100a-1 having a base portion 103-1 that slopes downward in a curved manner.

### <Further other heat shield plate>

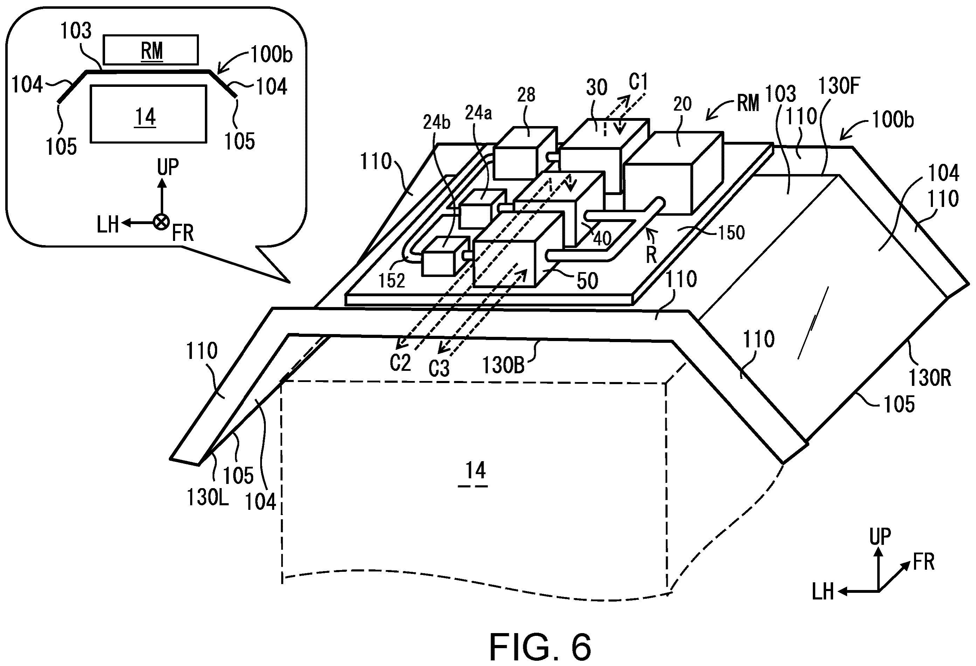

FIG. 6 is a perspective view showing another heat shield plate 100b and surrounding structure, and the upper left part of the figure shows the schematic configuration thereof. The heat shield plate 100b is configured such that the base portion 103 is horizontal and the extension portions 104 are provided on both left and right sides. The two extension portions 104 of the heat shield plate 100b are each inclined downward from the upper portion to the lower portion by a certain width. The left edge 130L and right edge 130R of the heat shield plate 100b are each the lower end 105 of the heat shield plate 100b, where the guide 110 protruding upward is omitted. The heat shield plate 100b has a symmetrical shape.

The heat shield plate 100b also achieves the same or similar effects as the heat shield plates 100, 100a, and 100a-1 described above.

### <Partition plate for electric wire connection>

In the embodiment described above, the refrigerant module RM was disposed on the upper side of the drive unit 14. However, as shown inside the dotted line in the lower left of FIG. 4, the refrigerant module RM may be disposed on the upper side of the electric wire connection 15. The electric wire connection 15 is a connection portion between wire and electrical device or between wires. The electric wire connection 15 is, for example, a power supply terminal of a battery, a connector of an electrical device, or a connector between wires. The electric wire connection 15, which is the connection portion between the connector 302 of the wire 300 and the connector 202 of the electrical device 200 (inverter, etc.), is shown inside the dotted line at the bottom left of FIG. 4. A partition plate 101 is disposed between the refrigerant module RM and the electric wire connection 15. The partition plate 101 may be a plate with heat shielding properties (heat shield plate) or a plate without heat shielding properties. In this specification, the partition plates include both a plate with heat shielding properties (heat shield plate) and a plate without heat shielding properties (A partition plate may or may not have heat shielding properties). The partition plate 101 of the electric wire connection 15 may adopt any of the shapes and arrangements of the heat shield plates 100, 100a, 100a-1, and 100b described above.

### <Modification example>

In the embodiment described above, the refrigerant module RM was disposed on the upper side of the drive unit 14, but the refrigerant module RM may also be disposed on the lower side of the drive unit 14. For example, the refrigerant module RM may be disposed behind the front end 14F (see FIG. 3) of the drive unit 14 and on the lower side of the drive unit 14. A heat shield plate is disposed between the drive unit 14 and the refrigerant module RM.

Additionally, the refrigerant module RM may be arranged adjacent to a heat generating element other than the drive unit 14. In the vehicle 10, the refrigerant module RM and the heat generating element such as the drive unit 14 may be arranged in parallel in the vertical direction, the front-rear direction, or the left-right direction. The heat shield plate is disposed between the refrigerant module RM and the heat generating element such as the drive unit 14. The material of the heat shield plate may be, for example, metal, resin, etc.

In the vehicle 10, the refrigerant module RM and the electric wire connection may be arranged in parallel in the vertical direction, the front-rear direction, or the left-right direction. The partition plate is disposed between the refrigerant module RM and the electric wire connection. The material of the partition plate may be, for example, metal, resin, etc.

Furthermore, in the embodiment described above, the refrigerant circuit R was integrated with plate 150 to form the refrigerant module RM. However, the refrigerant circuit R does not necessarily need to be integrated with plate 150 or the like. In other words, the multiple devices and refrigerant pipes that constitute the refrigerant circuit R may be located on one side of the heat shield plate (or partition plate). For example, the multiple devices constituting the refrigerant circuit R may each be held by structure(s) within the engine room 92.

### <Another air conditioner>

Next, another air conditioner will be described. FIG. 7 is a schematic diagram showing the configuration of another air conditioner 12a. This air conditioner 12a has a configuration in which the expansion valve 24b, the third heat exchanger 50, and the third cooling liquid circuit C3 are omitted from the above air conditioner 12 (see FIG. 1). The refrigerant circuit Ra of this air conditioner 12a is configured by connecting the compressor 20, the condenser 22, the receiver 28, the expansion valve 24a, and the evaporator 26a in series by refrigerant pipes.

This air conditioner 12a is configured so as not to cool the battery 54 (see FIG. 1). The battery 54 may be cooled by a cooling device provided separately from the air conditioner 12a. In addition, vehicles such as engine vehicles that do not have the battery 54 (the battery that supplies power to the motor) can adopt this air conditioner 12a because a cooling device for the battery is not required.

**In** this air conditioner 12a, the devices (parts) inside the dotted line in FIG. 7 are arranged on one side of the heat shield plate or partition plate. These devices (parts) may be arranged on one side of the heat shield plate or partition plate described above in the form of an integrated refrigerant module RMa or in the form of individual devices (parts) held by structure(s) within the vehicle body.

## Claims

1. An in-vehicle air conditioner (12, 12a) comprising:
a refrigerant circuit (R, Ra) for circulating a hydrocarbon refrigerant, the refrigerant circuit (R, Ra) comprising a compressor (20), a condenser (22) for heat dissipation, an expansion valve (24a), and an evaporator (26a) for heat absorption;
a first heat exchanger (30) which is integrally formed with the condenser (22) of the refrigerant circuit (R, Ra) to transfer heat from the refrigerant contained in the condenser (22) to a first cooling liquid;
a first cooling liquid circuit (C1) for circulating the first cooling liquid, the first cooling liquid circuit (C1) having a radiator (34);
a second heat exchanger (40) which is integrally formed with the evaporator (26a) of the refrigerant circuit (R, Ra) to cool a second cooling liquid with the refrigerant contained in the evaporator (26a);
a second cooling liquid circuit (C2) for circulating the second cooling liquid, the second cooling liquid circuit (C2) having a cooler core (72);
an air conditioning unit (70) comprising an air passage (75) in which the cooler core (72) is disposed, the air conditioning unit (70) being configured to cool air passing through the air passage (75) and send the cooled air to a vehicle compartment (90); and
a heat shield plate (100, 100a, 100a-1, 100b) disposed between an area including the refrigerant circuit (R, Ra), the first heat exchanger (30), and the second heat exchanger (40) and another area including a heat generating element (14) disposed within a vehicle (10).

2. The in-vehicle air conditioner (12, 12a) according to claim 1, wherein
the area including the refrigerant circuit (R, Ra), the first heat exchanger (30), and the second heat exchanger (40) is located above the other area including the heat generating element (14);
the heat shield plate (100, 100a, 100a-1, 100b) includes an inclined portion that is inclined downward toward one end of the heat shield plate (100, 100a, 100a-1, 100b); and
a lower end (105) of the inclined portion of the heat shield plate (100, 100a, 100a-1, 100b) is located outside the heat generating element (14).

3. The in-vehicle air conditioner (12, 12a) according to claim 2, wherein
the heat generating element (14) comprises a high-temperature portion (HTP) and a low-temperature portion (LTP) that is at a lower temperature than the high-temperature portion (HTP); and
the inclined portion of the heat shield plate (100, 100a, 100a-1, 100b) comprises an upper portion (120U) located above the high-temperature portion (HTP) of the heat generating element (14) and a lower portion (120L) located at a position lower than the upper portion (120U) and above the low-temperature portion (LTP) of the heat generating element (14).

4. The in-vehicle air conditioner (12, 12a) according to any of claims 2 or 3, wherein
the inclined portion of the heat shield plate (100, 100a, 100a-1, 100b) has guides (110) protruding upward at opposite ends of the inclined portion, the guides (110) facing each other; and
the inclined portion of the heat shield plate (100, 100a, 100a-1, 100b) has no guide (110) protruding upward on the lower end (105).

5. An in-vehicle air conditioner (12, 12a) comprising:
a refrigerant circuit (R, Ra) for circulating a hydrocarbon refrigerant, the refrigerant circuit (R, Ra) comprising a compressor (20), a condenser (22) for heat dissipation, an expansion valve (24a), and an evaporator (26a) for heat absorption;
a first heat exchanger (30) which is integrally formed with the condenser (22) of the refrigerant circuit (R, Ra) to transfer heat from the refrigerant contained in the condenser (22) to a first cooling liquid;
a first cooling liquid circuit (C1) for circulating the first cooling liquid, the first cooling liquid circuit (C1) having a radiator (34);
a second heat exchanger (40) which is integrally formed with the evaporator (26a) of the refrigerant circuit (R, Ra) to cool a second cooling liquid with the refrigerant contained in the evaporator (26a);
a second cooling liquid circuit (C2) for circulating the second cooling liquid, the second cooling liquid circuit (C2) having a cooler core (72);
an air conditioning unit (70) comprising an air passage (75) in which the cooler core (72) is disposed, the air conditioning unit (70) being configured to cool air passing through the air passage and send the cooled air to a vehicle compartment (90); and
a partition plate (101) disposed between an area including the refrigerant circuit (R, Ra), the first heat exchanger (30), and the second heat exchanger (40) and another area including an electric wire connection (15) disposed within a vehicle (10).
